Europäisches Patentamt

European Patent Office

Office européen des brevets

(11) Publication number: **0 228 540**
A1

# (12) EUROPEAN PATENT APPLICATION

(21) Application number: 86115482.1

(22) Date of filing: 07.11.86

(51) Int. Cl.4: **B65H 54/553**

(30) Priority: 24.12.85 GB 8531722

(43) Date of publication of application:
15.07.87 Bulletin 87/29

(84) Designated Contracting States:
CH DE FR GB IT LI

(71) Applicant: **MASCHINENFABRIK RIETER AG**
**Postfach 290**
**CH-8406 Winterthur(CH)**

(72) Inventor: **Demuth, Robert**
**Maulackerstrasse 17**
**CH-8309 Nürensdorf(CH)**
Inventor: **Hefti, Walter**
**Stichstrasse 1**
**CH-8355 Ettenhausen(CH)**
Inventor: **Keller, Urs**
**Heimensteinstrasse 23**
**CH-8472 Seuzach(CH)**
Inventor: **Hanselmann, Daniel**
**Kernstrasse 17**
**CH-8406 Winterthur(CH)**

(54) **Package support.**

(57) A tube-supporting cradle mechanism for a yarn
take-up is provided with a resiliently-deformable
body enabling relative adjustment of adjoining parts
to permit line contact between a tube supported by
the cradle and a friction drive roll.

Fig. 3

## PACKAGE SUPPORT

The present invention relates to bobbin tube supporting mechanisms for thread package forming machines of the type in which a tube or a package forming thereon engages a rotatable roller. The roller may be of the grooved drum type adapted to traverse the thread to and fro, or a separate traverse mechanism may be provided, to enable formation of a cross-wound package. In the preferred arrangement, the mechanism is of the so-called cradle type, having a pair of arms between which the bobbin tube is supported in use. However, the invention can also be applied to the alternative arrangement in which the bobbin tube is supported on a cantilevered stub shaft or spindle.

Prior Art

In thread take-up systems of the relevant type, it is known to support bobbin tube engaging elements in a manner enabling limited movement thereof relative to other parts of the mechanism, thereby providing for a limited degree of adjustment to compensate for misalignments when the tube is brought into contact with the roller. One such system is shown, for example, in German Patent Specification No. I560475. An alternative system is shown in Swiss Patent Specification No. 339I02.

It has been found, however, that these known systems still do not enable compensation of misalignments so as to produce line contact between the bobbin tube and the roller. Furthermore, they do not provide damping against the effects of shocks which inevitably arise during formation of cross-wound packages. The present invention enables both these effects to be achieved.

Present Invention

In accordance with the present invention, a body of resiliently deformable material is used to enable the required degree of line contact between the tube/package and the roller.

The material may be resiliently compressible, for example a porous elastomeric material such as a polyurethane elastomer. The important feature here is, however, volume compressibility of the body and this characteristic may be achieved by means other than the inclusion of pores in the material of the body. For example, a body of compact elastomeric material may be formed so as to define one or more spaces such that the material can be deformed into the space or spaces (thereby enabling volume compression of the body) to provide the required resilient compressibility.

The resiliently deformable body will be mounted in use between adjoining, relatively rigid parts. Those parts may be secured relative to each other by the body.

Preferably, those parts are not required to rotate relative to each other in use, i.e. the body is not required to transmit torque between the adjoining parts.

The body may be arranged for preferential deformation to permit relative movement of the adjoining parts in at least one "preferred" direction at right angles to the axis of rotation of the tube/package. The preferred direction is also preferably substantially at right angles to a support arm carrying the tube/package during a winding operation. The body may also be arranged to prevent, or at least restrict, relative movement of the adjoining parts in one or more other directions, for example along the axis of rotation of the tube/package, at least as far as such movement is dependent upon deformation of the body.

Preferential deformability of the body may be arranged by suitable formation of the body, and assembly thereof with the adjoining parts to form a unit. The arrangement may be such that at least one predetermined space is left in the assembly prior to deformation of the body in use, such that when forces are applied to the assembly tending to cause relative movement of the parts in the preferred direction, the body is able to deform into said predetermined space(s). The arrangement may be such that little or no space is left for deformation of the body to permit movement of the parts in the said one or more other directions.

In the preferred arrangement, the body of resilient material is incorporated in a bearing unit which can be mounted in the tube supporting mechanism so as to support a tube-engaging element for rotation about a defined axis relative to another portion of the mechanism, for example one of the arms in a cradle mechanism. The bearing unit can comprise a conventional bearing comprising a pair of relatively rotatable bearing elements. This conventional bearing may be mounted on a support, for example in the form of a shell or housing, and retained relative thereto by means of the body of resilient material. The body of resilient material is then conveniently ring-shaped. Preferential deformation can be facilitated by suitable choice of ring section.

By way of example embodiments of the invention will be described with reference to the accompanying diagrammatic drawings, in which:

Figs. 1 and 2 are copies of the corresponding Figures taken from copending European Patent Application No. 86105117.5, showing one type of thread package holder to which the present invention can be applied,

Fig. 3 is a vertical cross section through a bobbin tube support arrangement in accordance with the present invention and suitable for use in the holder of Figs 1 and 2,

Fig. 4 is a corresponding cross section through a bearing unit suitable for use in the embodiment of Fig. 3, and illustrated in further detail to show one possible way of manufacturing such a unit,

Fig. 5 shows a series of six sketches representing alternative arrangements falling within the present invention, each using a body of resilient material similar in structure to that used in the embodiments of Figs. 3 and 4,

Fig. 6 is a view similar to Fig. 3, showing an arrangement similar to that illustrated in Fig. 3 but applied to support of the smaller diameter end of a conical tube,

Fig. 7 shows a modification of the embodiment of Fig. 6,

Fig. 8 shows a bearing unit comprising an alternative form of resilient ring for inclusion in a bobbin tube support arrangement according to the invention,

Fig. 9 shows the cross section of an alternative form of resilient ring,

Fig. 10 shows a bearing unit including the ring of Fig. 9,

Fig. 11A shows yet a further cross section of a resilient ring in the uncompressed state, and

Fig. 11B shows the same ring in the compressed state, only part of the ring being shown in each case,

Fig. 12 shows an alternative to the embodiment of Fig. 6.

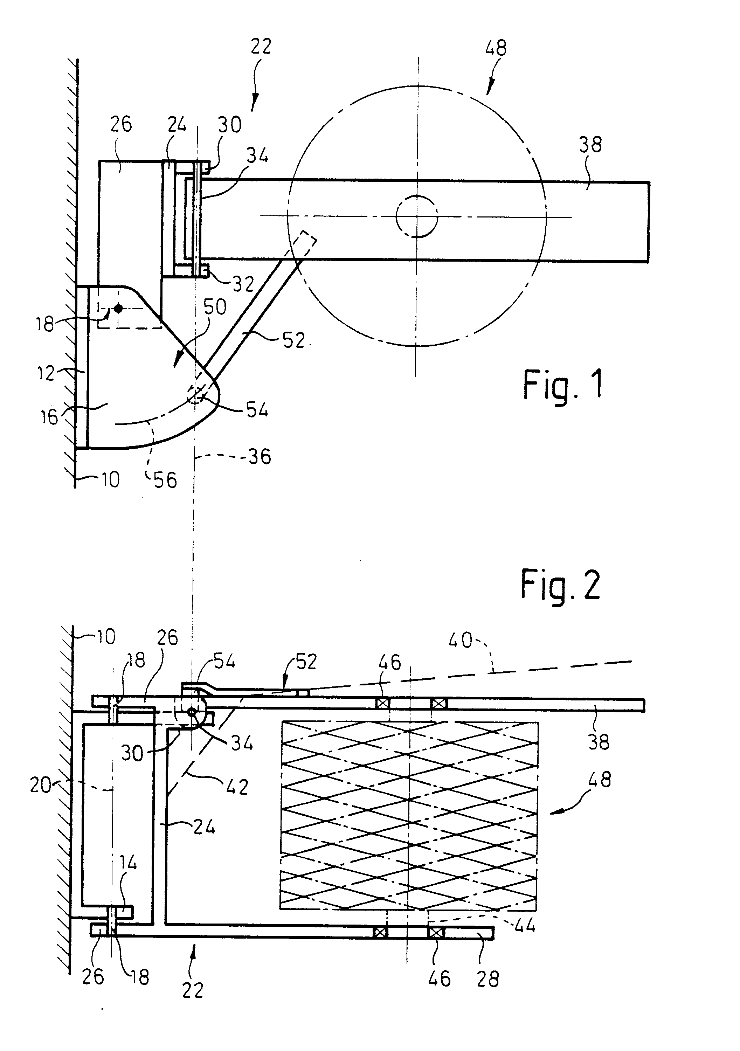

The thread (or yarn) package holder illustrated in Figs. 1 and 2 is described in detail in copending European Patent Application No. 86105117.5, the full disclosure of which is hereby incorporated in the present specification by reference. The details will not be repeated here, but the arrangement will be described briefly using reference numerals corresponding with those used in the copending application.

Reference numeral 10 indicates part of the machine frame, the remainder of which is omitted since it is not important to the invention. Numerals 14 and 16 indicate side plates projecting forwardly from a bracket 12 which is secured in any suitable manner to frame 10. Pins 18 are supported in these side plates in order to form a pivot joint for a so-called cradle indicated generally at 22. This cradle comprises a yoke 24 having rearwardly extending side plates 26 mounted on the pins 18 to form the pivot joint referred to above. The cradle further comprises a first arm 28 integral with yoke 24, and a second arm 38 pivotally mounted by a pin 34 in lugs 30, 32 also integral with yoke 24. Arm 38 can be pivoted about pin 34 from the illustrated position (approximately parallel to arm 28) to a position spaced further away from arm 28 to enable insertion or removal of a bobbin tube 44 between the cradle arms. When the cradle is "closed" (arm 38 in its illustrated position) tube 44 is supported between the two arms, while being rotatable relative thereto by means of bearings diagrammatically indicated at 46. During a winding operation, a thread or yarn package indicated at 48 can be wound on the tube 44.

The copending application deals with a friction damping system comprising a leaf spring 52, a contact element 54 and a segment-shaped forward extension on side plate 16. These parts can be included in a package holder in accordance with the present invention, but are not essential thereto. The present invention is concerned more particularly with arrangements for enabling support of the bobbin tube 44 in a desired disposition relative to other parts of the machine, as will be described with reference to the remaining Figures of the drawings.

The diagrammatic representations in Figs. 1 and 2 show an arrangement in which each bearing 46 is mounted directly in its respective arm, and the tube 44 is supported within the bearing. In practice, the tube and any package carried thereby is rotated by frictional contact with a drive roll (not illustrated in Figs. 1 and 2). The drive roll is itself rotatable about an axis substantially parallel to the axis of tube 44 in Figs. 1 and 2. Clearly, in an arrangement in accordance with those Figures, the axial length of such a drive roll must be less than the spacing of the arms 28, 38 when those arms are closed. In effect, the cradle 22 must have an individual drive roll or drive roll portion which fits between its arms 28, 38.

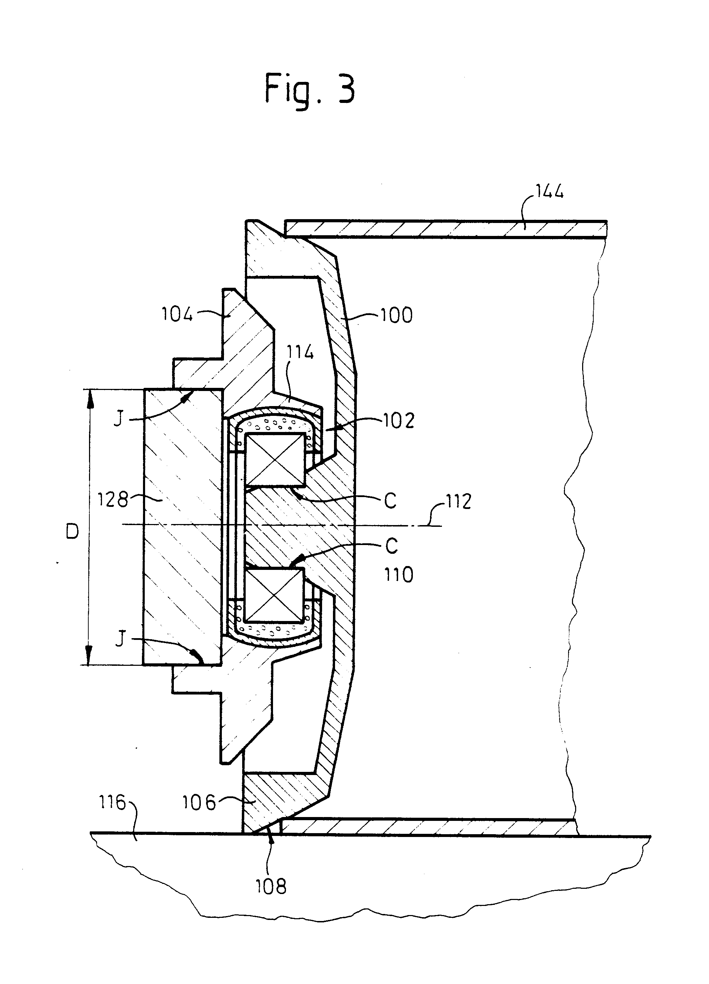

In many machines, however, a row of cradles is provided, the cradles being arranged side by side with their pivot axes (defined by the pins 18, Figs. 1 and 2) more or less aligned in a horizontal direction. For cylindrical packages, a common friction drive roll is provided for all of these cradles. The roll may be formed as a shaft of substantially constant diameter extending past the complete row of cradles and substantially parallel to the pivot axes thereof. In such an arrangement, a bobbin tube, such as tube 144 in Fig. 3, must have an external diameter greater than the depth D of the associated arms of the cradle. In Fig. 3, one such arm is indicated at 128, corresponding with arm 28 in Figs. I and 2. The following paragraphs will describe the arrangement for supporting one end of tube 144 relative to arm 128. Essentially the same arrangement can be used to support the tube relative to the other arm of the cradle corresponding with arm 38 in Figs. I and 2.

When conical packages are to be wound, the machine may still have a common drive shaft for all winding positions. However, this shaft may carry individual roll-building portions (sleeves) associated with respective take-up positions. In some arrangements of this type, each sleeve is made up of a plurality of separately rotatable sections arranged axially adjacent so that each section contacts the tube or a package thereon in use. In a preferred arrangement, disclosed in European Patent 63690, the sections are linked by a drive transmission. The disclosure of that European Patent (corresponding with US Patent 4415125) is incorporated herein by reference.

The present invention is applicable to winding of both conical and cylindrical packages. Bobbin tube 144 shown in Fig. 3 may therefore be assumed to be either conical or cylindrical. From the point of view of the present invention, it is irrelevant whether the roller engaging the package is a grooved drum traversing the thread, or whether a separate traverse mechanism is provided to enable formation of crosswound packages.

The tube support essentially comprises three elements, namely a tube receiving plate or disc 100, a bearing unit generally indicated by the reference numeral 102 (this unit will be described in detail later in the specification) and a support ring 104 receiving the bearing unit 102 and secured (by means not shown) to arm 128.

Disc 100 has at its outer edge a flange 106 formed with a generally frusto-conical portion making actual engagement with tube 144. At its center, the disc has a stub shaft 110 which is a press fit in the bearing unit 102. Disc 100 is thus rotatable about axis 112 of the bearing unit.

Support ring 104 also has a flange 114 defining part of a socket (not specifically indicated) receiving bearing unit 102. The internal surface of the socket is part-spherical to cooperate with a corresponding part-spherical surface on the exterior of unit 102. Flange 114 is elastically expandable so that unit 102 can be snap-fitted into its receiving socket. The arrangement is generally in accordance with that shown in German Patent Specification No. 1560475 and the corresponding United States Patent Specification No. 3286948.

Bearing unit 102 supported on arm 128, and the similar (non-illustrated) bearing unit supported in the same manner on the other arm of the cradle, may be able to shift in their respective sockets so that after mounting of a tube 144 in the cradle, the axes 112 of the bearing units adapt to the disposition of the tube. It has been found, however, that this does not suffice to ensure that tube 144 immediately makes line contact with a friction drive roll, part of which is diagrammatically indicated at 116 in Fig. 3. In practice, it is very often found that either one end or the other of the tube first makes contact with roll 116, and the "universal mounting" provided by the socket receiving bearing unit 102 is insufficient to compensate the misalignment. The misalignment might be due, for example to faults in the tube form (perhaps caused by damage thereto) or to poor orientation of the tube relative to the support discs 100.

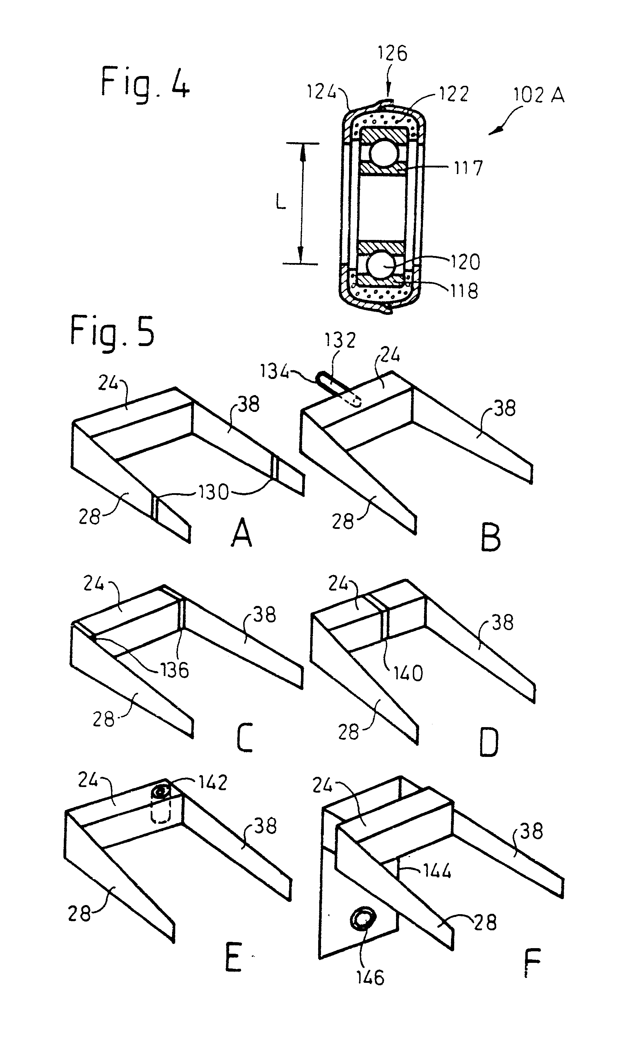

Such misalignment can be compensated by a bearing unit 102 in accordance with the present invention. The arrangement can be seen more clearly from the more detailed illustration in Fig. 4. However, since the latter illustrates a specific mode of manufacture of the unit, which is not essential to the invention, it is considered to represent only one embodiment of the new bearing unit which has been designated unit 102A in Fig. 4.

As seen in Fig. 4, unit 102A comprises an inner race or ring 117, an outer race or ring 118 and ball bearings 120 running on the races 117, 118 to enable relative rotation of the races about the bearing axis 112. The outer race 118 is embedded in a ring 122 of a porous elastomeric material which will be described in further detail below. The whole unit is encased in a shell or housing 124 made up of left hand and right hand sections joined in an annular zone 126 substantially at right angles to axis 112. In the illustrated arrangement, the join is made by overlapping portions of the two sections and securing them together with an adhesive. However, any other alternative joining technique could be used, and any other convenient technique could be used to provide a suitable shell around bearing unit. Shell 124 provides the previously-mentioned part-spherical surface which is received in the socket in support ring 104.

The porous elastomeric ring 122 is selected so that it is compressible between the outer race 118 and shell 124 under the force urging tube 144 into contact with roll 116 in use. The means for producing such a force have not been illustrated in the drawings. That means can be of a conventional type, for example a spring-weighted system as illustrated in British Patent Specification No. 1349425. Any other suitable method for providing a controlled force urging tube 144 into contact with roll 116 could be used, for example a selectively pressurizable unit could be used for that purpose. The forces created by these means may be of the magnitude conventionally used for winding of thread packages in, say, rotor spinning machines - (for example as described in European Patent Specifications No. 126352 and 127017), backwinding machines (for example as in United States Patent Specification No. 3971520 and No. 3356306), texturizing machines (for example in accordance with British Patent Specification No. 1399891) or any other type of yarn processing machine using this form of thread take-up system.

The diameter L (Fig. 4) of the inner edges of the shell 124 is less than the exterior diameter of outer race 118. The elastomeric material extends radially inwardly between the axial end walls of the shell and the corresponding axial faces of the outer race 118. Accordingly, the ball bearing made up of the two races 117, 118 and the balls 120 is securely retained in the shell 124, while being free to adjust - (move) relative to the shell within limits determined by the compressibility of elastomeric ring 122. As will be explained in greater detail later, outer race 18 is preferably relatively free to move in generally radial directions, but is relatively restrained in the axial direction.

Adjustment in response to applied forces is enabled by compression of the elastomeric ring between race 118 and the radially outer, generally cylindrical wall of shell 124. The ring 122 must be elastic to enable its recovery when the deforming force is removed, and it should retain this elasticity despite repeated deformation, i.e. the material of the ring should have negligible (or at least tolerable) compression set over a given operating life span.

Polyurethane elastomers of the type available under the trade marks "CELLASTO" and "SYLOMER" can be used. Both materials are available from the company Angst & Pfister AG of Zurich, Switzerland. Merely by way of example, the following dimensions are quoted for a bearing unit 102A suitable for use in a rotor spinning machine of the type supplied by the present applicants under the designation M2/1:
Diameter of the part-spherical surface on shell 124 24 mm
Length of the unit along axis 112   9 mm
External diameter of race 118   19 mm
Diameter L (Fig. 4)   15mm
Thickness of the metal sheet used in manufacture of shell 124   0.5 mm

Ring 122 may be under compression under all operating conditions (after manufacture of the unit 102A). The porous elastomeric materials referred to above enable very high degrees of volume compressibility, so that misalignments of up to approximately 2 mm may be com pensated by means of a unit 102A dimensioned as above.

In the above description, the preferred arrangement has been assumed, in which a bearing unit in accordance with the invention is provided on each cradle arm. This is not essential, but where a bearing unit in accordance with the invention is provided on one arm only, the cradle must be set relative to the roll 116 to ensure that the end of tube 144 which does not have a bearing unit in accordance with the invention cannot contact roll 116.

The invention is not limited to details of the embodiment shown in Figs. 3 and 4. In particular, it is not essential to incorporate the resiliently compressible or deformable material into a bearing unit, although that is the preferred arrangement. By way of example only, the material could be incorporated instead in the region of the joint J (Fig. 3) between arm 128 and support ring 104; alternatively, it could be provided in the region of the connection C between stub shaft 110 and bearing unit 102. Theoretically, the material could be incorporated in the structure of disc 100 itself, particularly in the region of contact with tube 144. However, in the latter region, it is liable to be subjected to destructive frictional contact with the tube, and it is recommended that this arrangement should be avoided wherever possible, although it is still considered to fall within the broad scope of the invention.

Furthermore, it is not necessary to incorporate the material in the arrangement connecting the tube receiv ing portion 100 to the cradle arm 128. The material can be included further back in the system along the cradle arm, and a variety of arrangements for enabling this are shown in Fig. 5. In each of the sketches shown in that Figure, the yoke of the cradle is indicated at 24 and the arms at 28, 38. In Fig. 5A, blocks of material 130 are built into each cradle arm and provide the required resilient compressibility. In Fig. 5B, the yoke 24 is rotatable about a pivot shaft 132 which enables selective winding of cylindrical or conical packages (the cone angle of the latter also being adaptable by a rotation of the yoke on the axis of tube 132); in this embodiment, a sleeve of resiliently compressible material 134 is provided at the stub shaft 132. In the embodiment of Fig. 5C, blocks of resiliently compressible material 136 are provided at the region of the junctions between yoke 24 and arm 28, 38. In the embodiment of Fig. 5D, the yoke 24 is itself made in two halves which are joined by a block 140 of resiliently compressible material. In Fig. 5E, the resiliently compressible material is provided as a sleeve 142 in the region of the pivot joint between arm 38 and yoke 24; in this case, only the arm 38 can adapt to misalignments as described above. In Fig. 5F, yoke 24 is itself secured to a support plate 144 which is pivotable about a pin 146 located below the cradle in order to adapt the disposition of the cradle to varying cone angles; the resiliently compressible material is provided as a sleeve 148 between the support plate 144 and pin 146.

The invention is also not limited to use of the relevant material with a double-armed cradle. Alternative package supports are known, for example as shown in United States Patent Specification No. 3971520. The use of a resiliently compressible or deformable material to enable compensation of misalignment in those package supporting systems is included within the scope of the present invention.

The invention provides advantages in winding of both cylindrical and conical packages. In both cases, it can ensure line contact of the tube with the friction roll, and the resiliently compressible or deformable material also tends to absorb small misalignments and shocks during package winding, thereby adapting to vibrations in the take-up system.

The advantages of the invention appear in particular, however, in winding of conical packages, and especially in coöperation with automatic piecing systems for spinning machines, for example of the type disclosed in copending European Patent Application No. 127017. In those systems, withdrawal of thread from a spinning unit after piecing is effected by a withdrawal system (for example a pair of rotatable withdrawal rolls) which operate at a determined speed independently of the take-up. A temporary thread store may be provided between the withdrawal system and the take-up. The take-up speed immediately following contact of a conical tube 144 with the friction roll may be very different, however, depending upon which end of the tube initially contacts the roll. This variability can be substantially eliminated by ensuring line contact. The approach is to be contrasted with an alternative in which the friction drive roll is deliberately formed so as to contact only a localised region on the bobbin tube, for example as described in United States Patent Specification No. 4266734. The approach put forward in the present application is particularly useful in take-up systems in accordance with our United States Patent No. 4415125 in which contact of both ends of the bobbin tube with the friction roll is desirable. However, the damping advantages of the resiliently compressible or deformable material are available even where line contact is not required.

In addition to providing a novel bobbin tube support system, the present invention provides a novel bearing unit, some examples of which have been described with reference to Figs. 3 and 4. This unit comprises a pair of relatively rotatable bearing elements (the races 117, 118 respectively), a mounting (shell 124) for the bearing unit and a resiliently deformable material between the bearing elements and the mounting, retaining the elements relative to the mounting while leaving them free to adjust relative to the mounting within limits determined by the deformability of the material. Many different arrangements may be provided to ensure relative rotatability of the bearing elements, for example the balls shown in Fig. 4, or barrel elements, or needles, or a plane (journal) bearing system. Clearly, the retaining material preferably coacts with only one of the bearing elements and the shell. Where the elements are arranged as inner and outer elements (one rotatable within the other) the mounting may be provided within the inner element or around the outer element (the latter arrangement is illustrated in Figs. 3 and 4). In the former case, the elastomeric material coacts with the inner element and the mounting, whereas in the latter case, as illustrated, it coacts with the outer element and the mounting.

Shell 124 may be made of sheet metal or other suitable casing material e.g. synthetic plastics. It may be formed in sections as described with reference to Fig. 4, or in one piece. Sections may be joined in planes at right angles to the bearing axis - (as illustrated) or containing that axis.

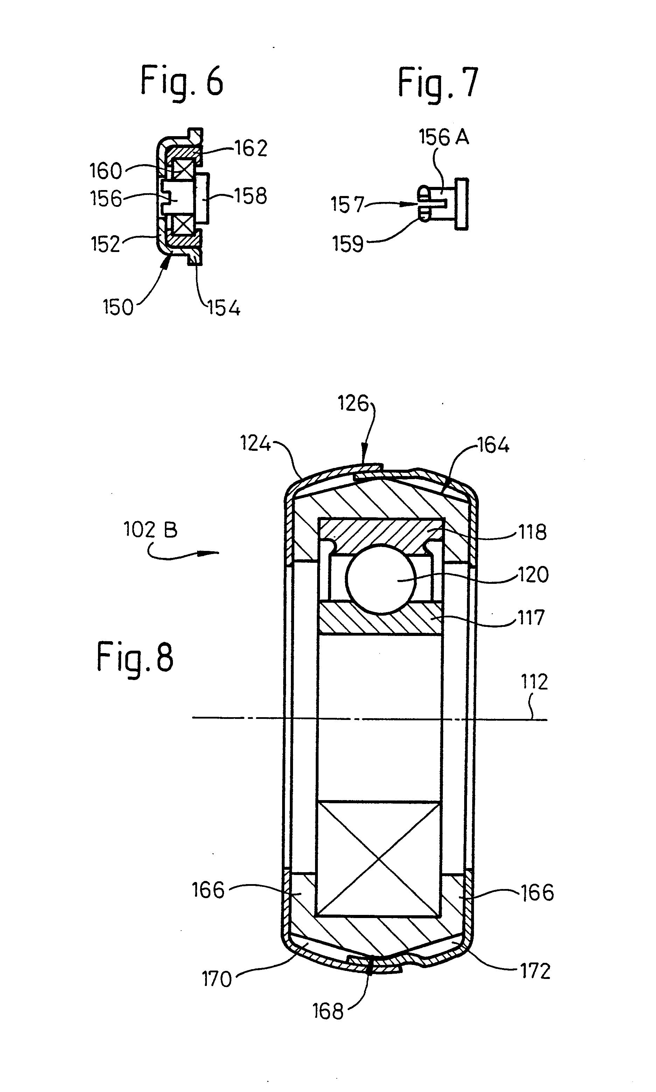

It is not, however, essential to provide a special bearing unit including a mounting (such as shell 124) with the resilient ring between the support and the bearing elements. An alternative arrangement is illustrated in Fig. 6, as applied to support of the smaller end of a conical bobbin tube, the larger end of which can be assumed to be supported by an arrangement as shown in Fig. 3.

In Fig. 6, the tube-engaging disc 150 has a generally dish-shaped body portion 152 with an outwardly projecting flange 154 at the open side of the dish. In use, body portion 152 projects into the open end of the tube (not shown) until the axial end face on the tube engages flange 154.

Disc 150 is mounted on the arm (not shown) of a cradle mechanism by means of a connector comprising a pin 156 and a flange 158 at one end of the pin. Flange 158 is secured by any convenient means (not shown) to the cradle arm, so that the longitudinal axis of the pin 156 extends substantially parallel to the axis of the friction roller (116 -Fig. 3) and the pin projects from its own support arm towards the other arm (128 -Fig. 3) of the cradle. A rotational bearing, for example comprising inner and outer races and ball bearings as shown in Fig.

4, is generally indicated at 160. This bearing is suitably secured to pin 156, for example by press-fitting the inner bearing race onto outer cylindrical surface of the pin (as assumed in Fig. 6) or by snap-fitting the bearing race over a pin 156A (Fig. 7) having a slot 157, and bulges 159 at its free end to retain the bearing.

A ring 162 of porous elastomeric material, similar to ring 122 in Fig. 4, is inserted between the outer cylindrical surface of body portion 152. The resilient ring can be glued to both these surfaces to retain disc 150 relative to bearing 160.

Ring 162 functions in the same way as ring 122 in enabling limited relative movement of adjoining relatively rigid parts, in this case disc 150 and bearing 160, and in absorbing and damping shocks and vibrations transmitted from the package / drive roller contact zone. However, this arrangement is subject to an additional problem which is not present in the arrangement of Fig. 3, namely that the resilient ring is also required to transmit torque from the disc 150 to the outer race of bearing 160. This can lead to premature failure of the assembly if the resilient ring is not able to withstand the loadings involved, in which case the resilient ring must be shifted to a location in the assembly at which it is no longer required to transmit torque, i.e. between the bearing and the pin / support arm - (instead of between the bearing and the package), or still further back in the cradle structure (as indicated in Fig. 5).

In any event, a readily releasable connection between the disc 150 and the support arm (not illustrated) -provided in Fig. 7 by the snap-fitting between bearing 160 and pin 156 -is preferred. This enables the disc to be readily removed from the support arm for clearance of any thread which has penetrated into the space between the disc unit (in Fig. 6 and 7 -disc 150, bearing 160 and ring 162) and the arm -which is a problem particularly likely to arise at the smaller end of a conical package.

Furthermore, at the smaller end of the conical tube, a snap-fit element in the form of a pin is preferred to the snap-fit socket 114 shown in Fig. 3, because space is extremely scarce in the assembly at the smaller cone end. At the same time, a slightly loose fit of the disc unit on the pin is acceptable (provided the disc unit is securely retained), because misalignments will be taken up by the resilient ring 162 -always assuming that the resilient ring is able to withstand the rotational loading. If the latter requirement is not fulfilled, the resilient body must be shifted back into the cradle mechanism (Fig. 5) if the pin-type connector is to be maintained.

Slot 157 of the pin effectively lies in a plane which should be disposed substantially at right angles to the length of the support arm (not shown). Thus, the force urging the cradle arm towards the friction roll er does not tend to release the coupling between the disc unit and the support arm.

In the embodiments thus far described, the pores in the elastomeric material provide "free space" between the bearing elements and an adjoining rigid part; the elastomeric material can be deformed into this free space (by closing some of the pores) to permit the required relative adjustment in the positions of the bearing elements and the adjoining rigid part to enable line contact of the tube with the friction roll. If the resiliently compressible body does not include pores, it could instead have a series of ridges (or equivalent projections) engaging the shell (or the facing surface on the bearing). Volume compressibility may then be enabled by deformation of material into spaces between the projections. Such a body can also be used in the arrangements shown in Fig. 5.

Further arrangements for creating free space to receive resiliently deforming material will now be described with reference to the remaining Figures, all of which assume a shell-mounted bearing unit - (102B, Fig. 8; 102C, Fig. 10) generally as shown in Fig. 4.

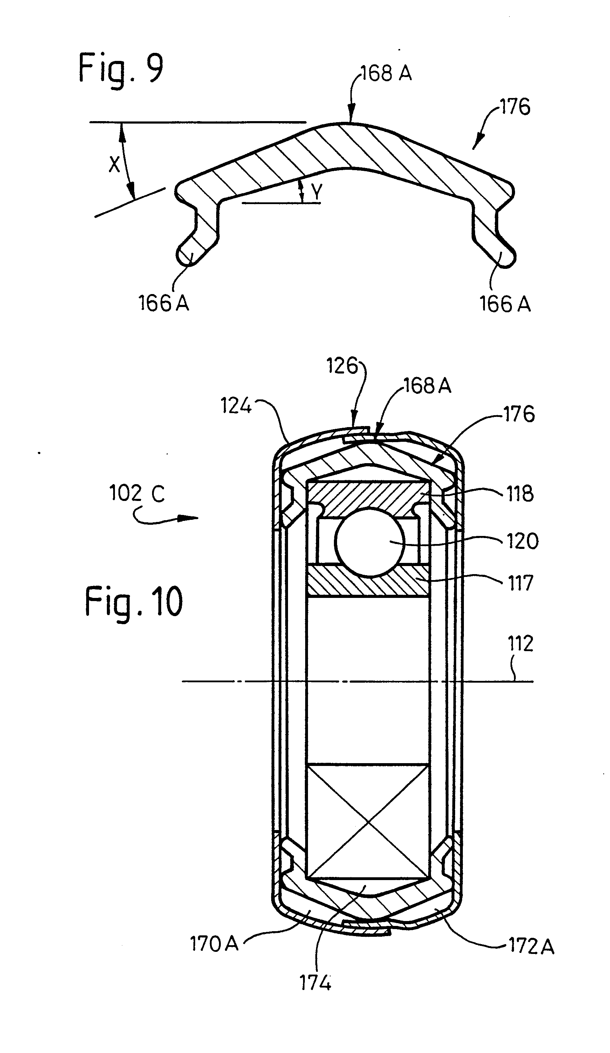

In Fig. 8, the shell is again indicated at 124 and is again made up by joining two halves in a median zone 126. The bearing itself again comprises inner and outer races 117, 118 respectively and ball bearings 120, all as already shown in Fig. 4. Since these elements also appear in the embodiment of Fig. 10, they have been indicated by the same reference numerals in that Figure, and will not be separately described in relation to Fig. 10. The difference lies in the form of the resilient ring indicated at 164 in Fig. 8 and 176 in Fig. 10. In each case, however, the ring itself is made of a compact elastomer, i.e. the body of the ring does not contain pores similar to those in ring 122.

Ring 164 has an annular groove (not specifically indicated) opening radially inwardly and defined between a pair of side flanges 166. The groove receives the outer race 118 of the bearing and the side flanges 166 are clamped between the sides of race 118 and the facing walls of shall 124. Since the material of ring 164 has no pores, there is little opportunity for flanges 166 to deform under forces acting axially of the bearing, so that the bearing and the shell are firmly secured relative to each other in the axial direction.

Fig. 8 illustrates the bearing unit in its "normal" or unloaded condition. As viewed in section, the radially outwardly facing surface of ring 164 is formed with a rounded apex 168 aligned with the

central joining zone 126 of the shell. The outer surface of the ring slopes away in both directions from apex 168 to the side walls of shell 124, thus leaving two annular chambers 170, 172 between the ring and the shell to either side of the apex.

Assume now that bearing unit 102B of Fig. 8 is substituted for unit 102 of Fig. 3, all other part remaining the same. Arm 128 is now applying a weighting force to the shell 124, urging tube 144 downwardly as viewed in Fig. 3 into contact with roll 116. Stub shaft 110 on disc 100 is applying an opposing reaction force to the bearing in unit 102B. The upper portion of ring 164 (as viewed in the assumed modification of Fig. 3) is squeezed between the outer race 118 and shell 124. At first, the forces act wholly in the narrow strip of contact between the apex 168 and shell 124 at the top of the bearing unit (as viewed in Fig. 3). The apex is therefore squashed in this contact zone and the required deformation of the ring is made possible by bulging of the ring into chambers 170, 172.

If the arm 128 happens to be supporting an end of tube 144 which comes into contact with roll 116 before the other tube end, then the total weighting force applied to the cradle mechanism will be acting in the contact strip just described. The degree of deformation of the ring will be correspondingly great, and deformation will continue until one of two results is achieved:
-the other end of the tube comes into contact with the roll, and the total weighting force is shared between the cradle arms (the desired result),
-the uppermost portions of chambers 170, 172, i.e. in the upper region of the bearing unit, are filled with material deformed out of its normal position so that the ring 164 cannot deform any further (the undesired result).

In the latter case, either the cradle mechanism should be readjusted to reduce misalignment (and hence the degree of compensation demanded from the ring), or the bearing unit must be re-designed to provide more free space between the bearing and the shell and hence greater freedom for deformation of the ring. Figures 9 and 10 show a solution of the second type.

Unit 102C shown in Fig. 10 functions in essentially the same way as unit 102B in Fig. 8, so that no additional description of the compensation principle is needed for Fig. 10. The main body of ring 176 is, however, formed as an arch as viewed in cross section (Fig. 9). The arch has a side flange 166A at each end and these once again define lateral boundaries of an annular groove receiving the outer race 118. Normally (i.e. before deformation of the ring) the axial edges of race 118 engage the ends of the arch as shown in Fig. 10.

Accordingly, before contact of the tube with the friction roll, three annular chambers are defined between the radially outwardly facing cylindrical surface of race 118 and the radially inwardly facing cylindrical surface of shell 124, namely chambers 170A and 172A corresponding with the similarly referenced chambers in Fig. 8, and the additional chamber 174 created between the arch and race 118. Deformation of the ring can be continued until the arch is squashed flat in one region thereof around its periphery.

The arch shape shown in Figures 9 and 10 represents the preferred embodiment. By way of example only, the angle X (Fig. 9) may be about 20° to 25° and the angle Y about 13° to 18°.

The apex 168A of the arch preferably contacts the shell 124 around its full circumference, so that the bearing and the shell adopt a defined relative position in the radial direction before load is applied to the bearing unit. This is not essential, however, a small gap might be left to be taken up be deformation of the ring.

As shown in Fig. 10, each flange 166A can be formed as an "auxiliary arch" opening outwardly in the axial direction. These auxiliary arches can be designed to give some degree of freedom for relative displacement of the bearing and the shell in the axial direction, while being sufficiently stiff to resist such displacement strongly. The axis 112 of the bearing thus tends to be held in a desired alignment relative to the shell, but some "give" is inserted if required by the auxiliary arches. Where possible, the flanges are made solid.

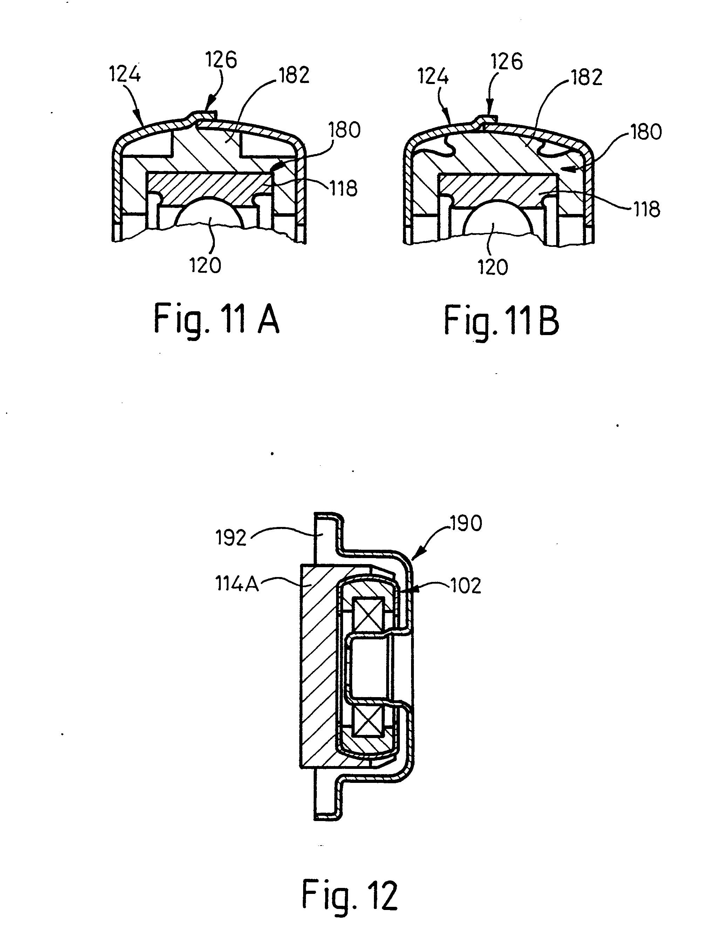

Figures 11 A and B illustrate yet another ring section, only the uppermost part of the ring being shown. The parts indicated at 118, 124, and 126 correspond with similarly numbered parts in other Figures. Ring 180 has a central, outwardly projecting ridge 182 engaging shell 124 in the join region 126. The width of the ridge represents about 1/4 to 1/3 the axial length of the ring when the latter is not deformed due to weighting forces on the bobbin tube (Fig. 11A). The height of the ridge then represents about 1/3 to 1/2 the radial thickness of the ring (excluding the flanges clamped between the axial walls of shell 124 and race 118).

When weighting forces are applied (Fig. 11B), the ridge is squashed between the cylindrical wall of shell 124 and the race 118, and "shoulders" form on the main body of the ring.

Fig. 12 shows an arrangement suitable for the smaller end of a conical tube and alternative to those shown in Figs. 3 and 6. The support arm (not shown) again carries a socket 114A to receive the bearing unit 102, which may take any of the forms shown in Figs. 3, 8, 10 and 11. The tube-engaging disc 190 is in this case of a thin-walled design, and a correspondingly strong material (e.g. steel) must

be chosen. Disc 190 has a flange 192 providing extra protection against penetration of threads to the region of the bearing if they slip off the end of the bobbin tube.

It will be noted that the rings in Figures 8, 10 and 11 are specifically formed to give preferential directions of relative displacement of the bearing and the shell, namely radially relative to the axis 112 of rotation of the bearing. The embodiment of Figure 3 is similar in this respect, in that the wall thickness of the side flanges (not specifically indicated in Fig. 3) is much less than the thickness of the main body of the ring, and therefore provides much less freedom for relative movement of the adjoining parts. Furthermore, initial clamping of the flanges between the shell and the bearing eliminates part of their resilience even if the flanges are made of a porous material. However, the embodiments of Figs. 8, 10 and 11 are preferred, because they can be designed to give optimal relative location of the bearing and the shell in the axial direction, which is desirable in itself and also facilitates accurate assembly of the whole bearing unit.

Approximately equal freedom for relative displacement in all radial directions is a desirable feature of the bearing unit, if only because the angular orientation of the unit at the time of mounting in the cradle mechanism is then irrelevant. However, freedom of relative movement in all radial directions is not actually essential to the invention. Considering the embodiments of Figs. 3, 8, 10 and 11, the ring does not rotate in use and is therefore compressed significantly · in only one relatively limited region around its periphery. The required freedom could be provided by a localised, resilient cushion. Essentially, the resilient body (whatever its form and wherever it may be located in the cradle mechanism) must be able to give to a limited degree in a direction parallel to the vector of reaction forces generated at the region of contact between the friction roller 116 and tube 144 (Fig. 3) in response to the weighting forces applied by the cradle to urge the tube into contact with the roller.

The reaction forces referred to above will act along a line joining the axis of rotation of the roller - (not shown in the drawings) to the zone of contact between the roller and the tube. This zone will vary slightly during a winding operation, partly due to the change in the geometry of the system as a package builds up on the tube (and the support arms -28, 38, Fig. 1 -are pivoted back from the roller) and partly due to the difference in consistency of a yarn package as compared with a tube. Usually it will be particularly important to ensure line contact between the roller and the tube at the start of package winding, and over a short period thereafter during which the tube is covered by only a thin layer of yarn windings. However, it is generally advantageous to ensure that resilient deformation is possible at all stages of package winding.

The provision of a resilient device encircling the axis of rotation of the tube (at least as far as that axis is effectively defined by the bearing) is that shocks and vibrations arising at the zone of contact between the tube/package and the roller are damped/absorbed. Shocks and vibrational forces may act in any direction transverse to the length of the tube.

As described briefly with reference to Figs. 1 and 2, and as is well known in the package winding art, the support arms 28, 38 apply axial forces required to retain the tube in the holder. By restricting the freedom of movement of the bearing relative to the shell in the axial direction, these axial holding forces are effectively transferred to the tube via the tube support means provided by the discs.

In fact, it is not essential to provide any freedom for relative displacement of the bearing and shell along the axis 112 provided the required freedom for radial movement is ensured. Thus, side flanges on the resilient ring could be eliminated, but the resulting bearing unit may prove more difficult to . assemble. This might be overcome, however, by securing the ring to the outer race prior to assembly with the shell.

Even if it surrounds the bearing axis, as illustrated, the resilient means is not necessarily made in one piece, but assembly of sections may also prove relatively difficult. If sections are used, circumferential gaps could be left between them. Such a resilient means could be provided, for example, by a hose structure having a flexible wall. In any event, the "single apex" shown in Figures 8 and 10 is not essential -a double apex (with an intervening trough) or a double arch could be provided.

It will be noted that the resilient ring tends to hold the bearing in predetermined, normal position relative to the shell when the bearing unit is unloaded, and tends to return the bearing to that disposition as load is removed. The shell effectively forms a means limiting freedom of movement of the bearing to a predetermined space, and the resilient means is provided within that space to hold the bearing in predetermined disposition relative to the shell. Freedom of movement is much more closely restricted in the axial direction than in the radial direction.

It will also be noted that in view of the permitted freedom of movement, pivotal movement of the shell 124 within its receiving socket 114 is unnecessary. The socket can be arranged to grip the shell firmly, while permitting its removel and replacement by a snap-fit action.

The invention is not of course limited to provision of the resilient means between a bearing and a shell. Clearly, similar effects could be achieved by provid ing the resilient means between a sleeve and the inner race of the bearing, in which case the sleeve preferably has outwardly projecting flanges cooperating with the inner bearing race to restrict movement thereof.

Where the resilient means is provided at another location in the cradle mechanism, e.g. as indicated in the sketches in Fig. 5, the parts adjoining the resilient means may be so formed as to restrict freedom of relative movement in the axial direction more than freedom of movement in the radial direction, and/or the resilient means itself may be provided with preferential deformability.

The axial movement permitted to the bearing elements in a unit as shown in Figures 3, 8, 10 and 11 can be made very small -0.2 to 0.3 mm or less. Each unit can be arranged to provide more than 1.5 mm radial movement, although advantages can still be achieved with lesser radial freedom (e.g. 0.5 mm and above).

The material selected for the rings shown in Figures 8, 10 and 11 may have a Shore hardness in the range 25 +/- 5 %. A lower hardness brings advantages in deformability, but very soft rubbery materials (with Shore hardnesses in the range 15 - 20) are difficult to process and subject to aging - they are not therefore readily commerically available. However, it is not necessary to use these very soft rubbers because the geometry of the ring can be adapted (as shown by the illustrated variants) to give the desired performance.

## Claims

1 A yarn take-up for winding yarn into a package comprising a roller rotatable about a predetermined axis (the "roller axis"), a tube supporting mechanism having means to define an axis of rotation (the "tube axis") for a tube supported by the mechanism and to urge the tube into engagement with the roller in a zone of contact on the roller, the tube axis and the roller axis being approximately parallel, and resilient means permitting relative displacement of relatively rigid parts of the mechanism adjoining said resilient means, characterised in that, said parts and said resilient means are such as to permit a greater extent of relative displacement in directions substantially parallel·to a line joining said roller axis to said zone of contact than in directions parallel to said axes.

2 A take-up as claimed in claim 1, characterised in that, the parts and the resilient means permit a greater extent of relative displacement in all directions radial to said tube axis than in said directions parallel to said axes.

3 A take-up as claimed in claim 2, characterised in that, said resilient means is provided by a resilient ring encircling said tube axis.

4 A take-up as claimed in claim 3 wherein said means defining said tube axis comprises a bearing, characterised in that the ring encircles the bearing.

5 A take-up as claimed in any preceding claim, characterised by a support arm and a snap-fit connection between the support arm and said means defining. said tube axis.

6 A take-up as claimed in claim 5, characterised in that, said snap-fit connection comprises a socket on to the arm receiving a mounting portion of said means defining said tube axis.

7 A take-up as claimed in claim 5, characterised in that, said snap-fit connection comprises a pin on the arm and a mounting portion on said means defining said tube axis, said mounting portion fitting on said pin.

8 A take-up as claimed in any preceding claim, characterised in that, said resilient means is adapted to hold one of said adjoining parts in a predetermined disposition relative to the other adjoining part, and the latter is adapted to define a restricted space within which the one part can move away from said predetermined disposition against a bias applied by said resilient means.

9 A take-up as claimed in claim 8, characterised in that, said space is more closely restricted in directions parallel to said axes than in directions parallel to said line.

10 A take-up as claimed in claim 8 or claim 9, characterised in that the resilient means is preferentially deformable, being relatively easily deformable in directions parallel to said line and relatively resistant to deformation in directions parallel to said axes.

11 A bearing unit comprising a pair of bearing elements relatively rotatable about a predetermined axis, a mounting member adapted to define a restricted space within which the bearing elements are movable relative to said mounting member and resilient means in said space tending to hold the bearing elements in a predetermined disposition relative to the mounting member, the resilient means and the mounting member together permitting displacement of said bearing elements relative to the mounting member radially of said axis while substantially preventing displacement of said bearing elements relative to said mounting member parallel to said axis.

12 A bobbin tube supporting mechanism for a thread or yarn take-up system in which the tube or a package forming thereon engages a rotatable roller,
characterised in that
a resiliently compressible body is incorporated in or associated with the mechanism such that resilient compression of said body can enable line contact of the tube/package with at least a plurality of spaced regions of the roller.

13 A bearing unit comprising relatively rotatable bearing elements, a shell and a body of resiliently compressible material retaining the elements relative to the shell while leaving them free to adjust relative thereto within limits determined by the compressibility of the material.

0 228 540

Fig. 1

Fig. 2

# Fig. 3

Fig. 4

126
124
122
102 A
117
L
120
118

Fig. 5

132
134
24
38
24
38
28
130
28
A
B

24
38
24
38
136
140
28
C
28
D

24
142
38
24
38
28
144
E
28
146
F

## Fig. 6

160
162
156
158
152
150
154

## Fig. 7

156 A
157
159

## Fig. 8

126
124
164
102 B
118
120
117
112
166
166
170
172
168

Fig. 9

168 A

176

X

Y

166 A

166 A

126

124

168 A

176

102 C

118

120

117

Fig. 10

112

170 A

172 A

174

Fig. 11 A

Fig. 11 B

Fig. 12

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-3 917 182 (LENK) <br><br> * Column 5, lines 2-28; column 7, lines 51-68; column 8, lines 1-22 * <br><br> --- | 1-4,8-13 | B 65 H 54/553 |
| D,A | CH-A- 339 102 (WALTER REINERS) <br><br> * Figure 6; page 2, lines 113-115 * <br><br> --- | 1-3,8, 11-13 | |
| A | FR-A-1 414 573 (WALTER REINERS) <br><br> * Whole document * <br><br> --- | 1-3,8, 11-13 | |
| D,A | US-A-3 286 948 (FRANZEN et al.) <br><br> ----- | | |

TECHNICAL FIELDS SEARCHED (Int. Cl 4)

B 65 H

The present search report has been drawn up for all claims

| Place of search | Date of completion of the search | Examiner |
|---|---|---|
| THE HAGUE | 31-03-1987 | D HULSTER E.W.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82